# EUROPÄISCHE PATENTANMELDUNG

(11) **EP 0 666 698 A1**
(43) Veröffentlichungstag der Anmeldung: **09.08.1995**
(21) Anmeldenummer: 95100636.0
(22) Anmeldetag: 18.01.1995
(51) Int. Cl.: H04Q 7/20

(54) **Verfahren und Anordnung zum Übertragen von Sprache in einem Funksystem**

(30) Priorität: 03.02.1994 DE 4403356
(71) Anmelder: SIEMENS AKTIENGESELLSCHAFT, 80333 München (DE)
(72) Erfinder: Schulz, Egon, Dr.Dipl.-Physiker, D-80993 München (DE)

(57) **Zusammenfassung**

Zum Übertragen von Sprache zwischen Teilnehmerstationen eines Funksystems, insbesondere eines Mobilfunksystems, bei dem Sprache durch Sprachrahmen (S) digital codiert wird, werden zunächst die Sprachrahmen (S) in sprachcodierte Sprachrahmen (S1) umgesetzt. Anschließend werden die sprachcodierten Sprachrahmen (S1) in fehlergesicherte sprach- und kanalcodierte Sprachrahmen (S2) umgesetzt. Jeweils eine Mehrzahl von diesen Sprachrahmen (S2) wird zu einem Multi-Sprachrahmen (MSF1) zusammengefaßt. Diese Multi-Sprachrahmen (MSF1) werden umgesetz und übertragen. Vor der Bildung der Multi-Sprachrahmen (MSF1) können aus den sprach- und kanalcodierten Sprachrahmen (S2) noch Zwischen-Sprachrahmen (ZS) erzeugt werden. Auf der Empfangsseite werden die Multi-Sprachrahmen (MSF3) wieder in sprach- und kanalcodierte Sprachrahmen (S3) aufgeteilt. Nach einer Umsetzung in sprachcodierte Sprachrahmen (S4) wird die in den Sprachrahmen (S') enthaltene digitale Sprachinformation wieder in analoge Sprache umgesetzt.

## Beschreibung

Die Erfindung bezieht sich auf ein Verfahren zum Übertragen von Sprache gemäß dem Oberbegriff des Patentanspruchs 1. Weiterhin bezieht sich die Erfindung auf eine Anordnung zum Durchführen des Verfahrens, sowie auf eine Teilnehmerstation und eine Zentralstation eines entsprechenden Übertragungssystems.

Bei einer Übertragung von Sprache zwischen Teilnehmerstationen eines Funksystems, insbesondere eines Mobilfunksystems ist es allgemein bekannt, auf der Sendeseite analoge Sprachinformation abzutasten und in einem Sprachcodierer in digital codierte Sprachinformation umzusetzen und diese gegebenenfalls fehlergesichert zu übertragen. Auf der Empfangsseite wird die digital codierte Sprachinformation wieder in analoge Sprachinformation umgesetzt und dann als Sprache ausgegeben.

Bei einem Mobilfunksystem ist üblicherweise eine zu versorgende Fläche in eine große Anzahl von Funkzellen eingeteilt. In den Zellen sind jeweils Basisstationen vorgesehen, über die die Verbindungen zwischen einem öffentlichen Telefonnetz und den Mobilfunkgeräten der einzelnen Teilnehmer in der jeweiligen Zelle hergestellt werden können. Ein derartiges Mobilfunksystem ist beispielsweise das vom European Telecommunication Standards Institute (ETSI) standardisierte GSM (Global System for Mobile Communication). Ein ähnliches System ist das DCS 1800/PCN.

Beim GSM wird die Sprache an der Schnittstelle zwischen den Basisstationen und den Mobilfunkgeräten durch digital codierte Signale übertragen. Dabei wird ein Codierungsalgorithmus für die Sprache verwendet, der eine Datenkompression um den Faktor acht auf 13 kbit/s durchgeführt.

Um den Datenstrom vor Störungen auf dem Funkkanal zu schützen, wird ein Fehlerkorrekturverfahren verwendet, bei dem mittels Kanalcodierung der zu übertragenden Information Redundanz hinzugefügt wird. Durch diese Kanalcodierung erhöht sich dann die Sprachdatenrate von 13 kbit/s auf 22,8 kbit/s. Diese Kodierung der Sprache und die Kanalkodierung sind in der Druckschrift SMOLKA, P.: GSM-Schnittstelle, telcom praxis 4/93, Seite 17 bis 24 beschrieben.

Um einerseits zufällige Bitfehler und andererseits Bündelfehler des Übertragungskanals korrigieren zu können, werden außerdem die zu übertragenden Daten verschachtelt (inter- leaved). Sie werden in Subblöcke zerlegt und übertragen. Auf der Empfangsseite werden die Subblöcke gesammelt und entschachtelt (de-interleaved). Danach werden die Daten einer Fehlerkorrektureinrichtung zugeführt, die eine Fehlerkorrektur der empfangenen Daten durchführt, und die auf der Sendeseite hinzugefügte Redundanz wird entfernt. Die so erhaltenen Daten werden dem Sprachdecodierer zugeführt, und dieser rekonstruiert die linear quantisierten Abtastwerte. Ein nachgeschalteter Digital-Analog-Umsetzer formt die digitalen Signale wieder in analoge Sprache um.

Die für die Übertragung eines Sprachrahmens von 20 ms von einem Mobilfunknehmer zu einem Festnetzteilnehmer oder umgekehrt benötigte Zeit beträgt etwa 90 ms. Bei einer Sprachübertragung von einem Mobilfunkteilnehmer zu einem anderen Mobilfunkteilnehmer verdoppelt sich diese Verzögerungszeit und beträgt ungefähr 180 ms.

Durch diese hohe Verzögerungszeit kann jedoch die Qualität der übertragenen Sprache durch Echos leiden.

Zur Verbesserung der Qualität der Sprachübertragung ist es wichtig, diese Verzögerungszeit zu reduzieren. Es wäre denkbar, die zu übertragenden kanalcodierten Sprachrahmen in einer kleineren Anzahl von Teilblöcken zu übertragen, wobei dann die Anzahl der Bits in den Teilblöcken vergrößert wird. Bei diesem Verfahren gehen jedoch im Fall von Störungen auf dem Mobilfunkkanal zu viele Bits verloren, d.h. das Fehlerschutzverfahren ist bei gleichbleibender Datenrate nicht aus reichend.

In der Patentanmeldung P... (GR 94 P 1031) wurde bereits vorgeschlagen, zum Übertragen von Sprache zwischen Teilnehmerstationen eines Funksystems, bei dem Sprache durch Sprachrahmen digital codiert wird, zunächst die Sprachrahmen in sprachcodierte Sprachrahmen umzusetzen und anschließend jeweils eine Mehrzahl von diesen Sprachrahmen zu einem Multi-Sprachrahmen zusammenzufassen. Diese Multi-Sprachrahmen werden mittels einer Kanalcodierung fehlergesichert und dann übertragen. Auf der Empfangsseite werden dann die Multi-Sprachrahmen wieder in sprachcodierte Sprachrahmen aufgeteilt und anschließend wird die in den übertragenen Sprachrahmen enthaltene digitale Sprachinformation wieder in analoge Sprache umgesetzt.

Der Erfindung liegt die Aufgabe zugrunde, ein weiteres Verfahren und eine weitere Anordnung anzugeben, bei deren Verwendung die Verzögerungszeit bei der Sprachübertragung wesentlich verringert wird und bestehende Mobilfunksysteme nur unwesentlich abgeändert werden müssen. Weiterhin liegt der Erfindung die Aufgabe zugrunde, eine entsprechende Teilnehmerstation und eine entsprechende Zentralstation anzugeben.

Erfindungsgemäß wird die Aufgabe bei dem Verfahren der eingangs genannten Art durch die im kennzeichnenden Teil des Patentanspruchs 1 angegebenen Merkmale gelöst. Eine Anordnung gemäß der Erfindung ist im Patentanspruch 23 angegeben. Eine entsprechende Teilnehmerstation und Zentralstation ist in den Ansprüchen 24 bzw. 25 angegeben.

Das Verfahren und die Anordnung gemäß der Erfindung haben den Vorteil, daß die Sprachqualität wesentlich verbessert wird. Weiterhin haben sie den Vorteil, daß ein bestehendes Mobilfunksystem ohne wesentliche Änderungen benutzt werden kann. Im Hochfrequenzteil sind keinerlei Änderungen erforderlich. Lediglich in dem die Codierungen beteffenden Teilen sind Anpassungen erforderlich.

Vorteilhafte Ausgestaltungen der Erfindung sind in den Unteransprüchen angegeben.

Ein Ausführungsbeispiel der Erfindung wird im folgenden anhand von Zeichnungen naher erläutert. Es zeigen:
Fig. 1 ein Blockbild eines bekannten Mobilfunksystems,
Fig. 2 ein Blockbild eines bekannten Sprach- und Kanalcodiersystems und Sprach-und Kanaldecodiersystems,
Fig. 3 eine schematische Darstellung einer bekannten Kanalcodierung,
Fig. 4 ein Blockbild eines erfindungsgemäßen Übertragungssystems,
Fig. 5 eine schematische Darstellung einer Kanalcodierung,
Fig. 6 eine schematische Darstellung einer weiteren Kanalcodierung,
Fig. 7 eine schematische Darstellung der Erzeugung von Multi-Sprachrahmen.
Fig. 8 eine schematische Darstellung der Bildung eines Zwischen-Sprachrahmens, und
Fig. 9 eine schematische Darstellung einer weiteren Ausführungsform eines erfindungsgemäßen Übertragungssystems, bei dem Zwischen-Sprachrahmen verwendet werden.

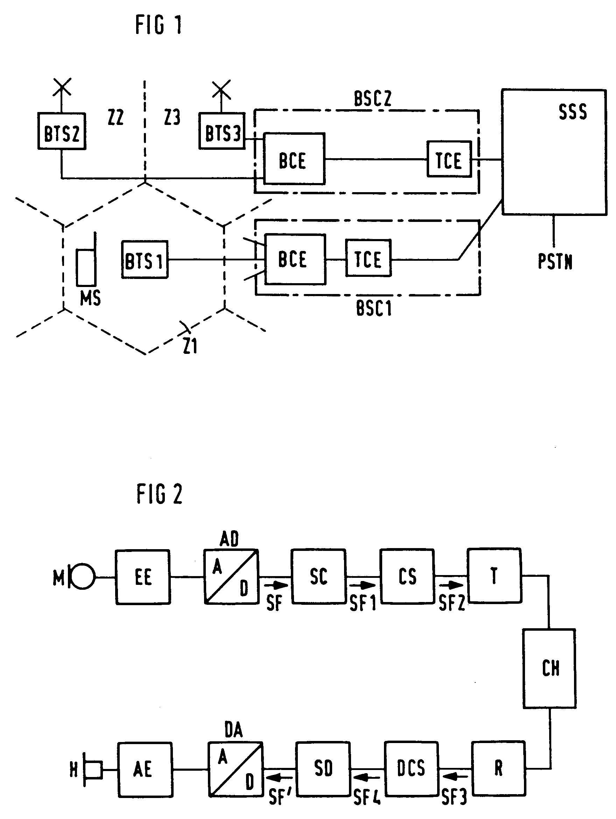

Bei dem in Fig. 1 dargestellten Mobilfunksystem ist ein Funkbereich eines entsprechend dem sog. GSM-Standard (GSM = Global System for Mobile Communication) arbeitenden Mobilfunksystems in mehrere Zellen Z aufgeteilt, von denen in Fig. 1 nur die Zellen Z1 bis Z3 bezeichnet sind. In einer derartigen Zelle Z wird der Telekommunikationsdienst von und zu einer Mobilstation MS durch eine Basisstation BTS bereitgestellt (BTS = Base Transceiver Station). In der Fig. 1 sind lediglich die den Zellen Z1 bis Z3 zugeordneten Basisstationen BTS1 bis BTS3 dargestellt. Eine oder mehrere Basisstationen BTS sind mit einer Basis-Steuereinheit BSC (BSC = Base Station Controller) verbunden, von denen in Fig. 1 nur die Basis-Steuereinheiten BSC1 und BSC2 dargestellt sind. Die Steuereinheiten BSC führen die lokalen Funktionen der Rufvermittlung, Überwachung und Wartung durch. Sie umfassen Steuereinheiten BCE (Base Station Control Equipment) und Codeumsetzer TCE (Transcoding Equipment). Mehrere Basis-Steuereinheiten BSC sind mit einer Vermittlungseinrichtung SSS (SSS = Switching Subsystem) verbunden, die ihrerseits mit dem öffentlichen Netz PSTN (PSTN = Public Switched Telefone Network) verbunden ist, das als ISDN-Netz, als Mobilfunknetz oder als sonstiges Telefon- oder Datennetz ausgebildet sein kann.

Falls ein Teilnehmer mit der als Teilnehmerstation dienenden Mobilstation MS in der Zelle Z1 mit einem anderen Teilnehmer kommunizieren will, so wird über die Basisstation BTS1 mit der Basis-Steuereinheit BSC1 ein vorgegebenes Protokoll abgewickelt, das beispielsweise in dem obengenannten GSM-Standard festgelegt ist. Wenn die Verbindung zwischen der Mobilstation MS und der Basis-Steuereinheit BSC1 hergestellt ist, wird über die Vermittlungseinrichtung SSS eine Verbindung zum öffentlichen Netz PSTN hergestellt. Von diesem aus wird dann der andere Teilnehmer, der wiederum mit einer Mobilstation versehen sein kann, erreicht.

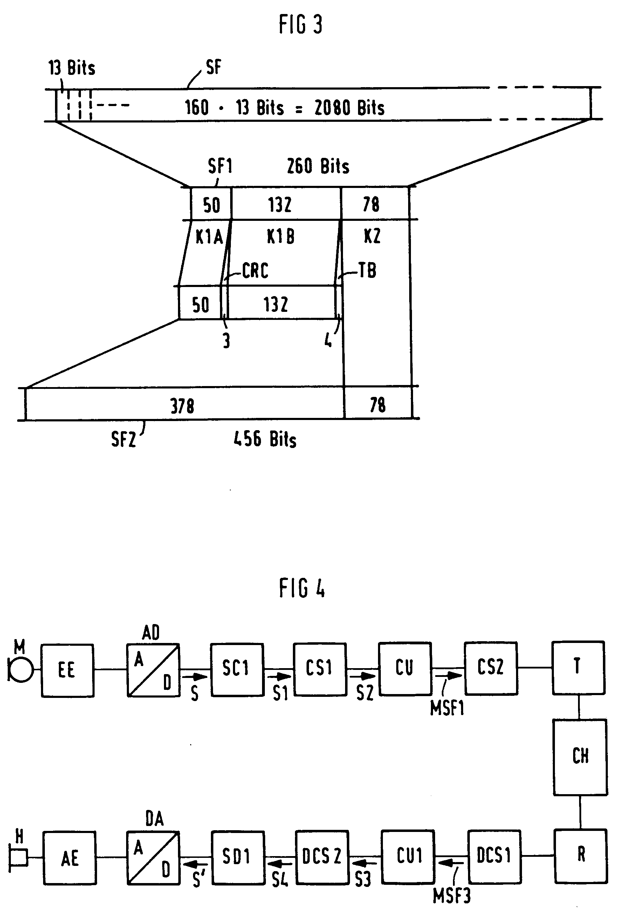

Bei dem in Fig. 2 dargestellten Blockbild eines Sprach- und Kanalcodiersystems sowie eines entsprechenden Decodiersystems wandelt ein an einer Eingabeeinheit EE angeschlossenes Mikrofon M die Sprache in analoge Sprachsignale um, die einem Analog-Digital-Umsetzer AD zugeführt werden. Der Analog-Digital-Umsetzer AD setzt die analogen Sprachsignale in Abtastwerte darstellende digitale Codewörter um. Die Abtastrate beträgt beispielsweise 8 kHz und die Codewörter geben die Abtastwerte mit z.B. 13 Bit linear quantisiert wieder, so daß am Ausgang des Analog-Digital-Umsetzers AD eine Datenrate von 104 Kbit/s vorliegt und es werden Sprachrahmen SF, bestehend aus jeweils 160 aufeinanderfolgenden Codewörtern, gebildet, wie es in Fig. 3 dargestellt ist. Die Sprachrahmen SF entsprechen somit einer Sprache von 160·1/8000 s = 20 ms und enthalten 160·13 Bits = 2080 Bits.

Dem Analog-Digital-Umsetzer AD ist ein Sprachcodierer SC nachgeschaltet, der beispielsweise nach dem RPE-LTP(Regular Pulse Excitation-Long Term Prediction)-Verfahren arbeitet. Der Sprachcodierer SC codiert jeden digitalisierten 20 ms-Sprachrahmen SF in einen sprachcodierten Sprachrahmen SF1 von 260 Bits und gibt diese Sprachrahmen SF1 mit einer Rate von 50/s ab. Durch den Sprachcodierer SC wird somit eine Datenkompression von 104 kbit/s auf 13 kbit/s, d.h. um den Faktor 8 durchgeführt.

Beim GSM wird die Sprache an der Schnittstelle zwischen der jeweiligen Basisstation BTS und dem Mobilfunkgerät MS durch digital codierte Signale übertragen. Um die digital codierten Signale vor Störungen auf dem Funkkanal zu schützen, wird in einer Codierstufe CS ein Fehlerkorrekturverfahren verwendet, das als Vorwärts-Fehlerkorrekturverfahren (Forward Error Correction (FEC)) bezeichnet wird. Bei diesem Verfahren wird mittels einer Kanalcodierung der zu übertragenden Information, d.h. der Sprachdaten in Form der sprachcodierten Sprachrahmen SF1, zur Erkennung und/oder Korrektur von Fehlern, Redundanz hinzugefügt. Beim GSM wird auf die Bits der Sprachdaten ein ungleich gewichtetes Fehlerschutzverfahren (Unequal Error Protection (UEP)) angewendet, d.h. die wichtigen Bits erhalten zum Schutz gegen Störungen mehr Redundanz und die weniger wichtigen Bits erhalten weniger Redundanz oder gar keine. Jedem sprachcodierten 20 ms-Sprachrahmen SF1, bestehend aus 260 Bits, werden zum Schutz gegen die Störungen hierzu 196 Bits Redundanz hinzugefügt, und der zu übertragende Sprachrahmen SF2 enthält dann 456 Bits. Durch diese Kanalcodierung erhöht sich dann die Sprachdatenrate von 13 kbit/s auf 22,8 kbit/s.

Bei der in Fig. 3 gezeigten bekannten Kanalcodierung werden die jeweils alle 20 ms abgegebenen sprachcodierten Sprachrahmen SF1 mit jeweils 260 Bits in drei Klassen K1A, K1B und K2 mit 50, 132 bzw. 78 Bits eingeteilt. Den 50 Bits der Klasse K1A werden durch die Godierstufe CS drei Paritätsbits CRC hinzugefügt, während den 132 Bits der Klasse K1B vier Füllbits TB hinzugefügt werden. Die sich auf diese Weise ergebenden 189 Bits werden der Codierstufe CS zugeführt, die entsprechend einem Faltungscode (Convolutional Code) Blöcke mit jeweils 378 Bits erzeugt. Die 78 Bits der Klasse K2 bleiben unverändert und werden hinzugefügt, so daß sich jeweils der zu übertragende Sprachrahmen SF2 mit den genannten 456 Bits ergibt.

Um einerseits zufällige Bitfehler und andererseits Bündelfehler des Übertragungskanals korrigieren zu können, werden die zu übertragenden Sprachrahmen SF2 in der Sendeeinrichtung T auseinandergezogen. Dabei werden die Daten verschachtelt (interleaved). Sie werden in acht Subblöcke mit je 57 Bits zerlegt, und je ein Subblock wird innerhalb von 4,615 ms übertragen. Die zu übertragenden Daten können noch verschlüsselt werden, bevor sie in einem Multiplexer verarbeitet und über die Übertragungsstrecke CH übertragen werden.

Auf der Empfangsseite werden die übertragenen Daten in einer Empfangseinrichtung R in einem Demultiplexer verarbeitet, entschlüsselt und die acht Subblöcke werden gesammelt und entschachtelt (de-interleaved). Danach werden die 456 Bits als Sprachrahmen SF3 einer Decodierstufe DCS zugeführt, die eine Fehlerkorrektur der übertragenen Daten durchführt, und die auf der Sendeseite hinzugefügte Redundanz wird entfernt. Die so erhaltenen Sprachrahmen SF4 mit jeweils 260 Bits werden dem Sprachdecodierer SD zugeführt, und dieser rekonstruiert den Sprachrahmen SF' mit den 160 mit jeweils 13 Bits linear quantisierten Codewörtern. Ein nachgeschalteter Digital-Analog-Umsetzer DA erzeugt aus den Codewörtern wieder analoge Sprachsignale und gibt diese über eine Ausgabeeinheit AE an einer Wiedergabeeinheit H aus.

Die für die Übertragung eines Sprachrahmens von 20 ms von einem Mobilfunknebmer zu einem Festnetzteilnehmer oder umgekehrt benötigte Zeit beträgt etwa 90 ms und setzt sich in etwa wie folgt zusammen:

| | |
|---|---|
| Sprachrahmen | 20,0 ms |
| Übertragung der Teilblöcke | 37,5 ms |
| Signalverarbeitungszeit | 27,5 ms |
| Übertragungszeit (terrestrisch) | 5,0 ms |
| Totale Verzögerungszeit | 90,0 ms |

Bei einer Sprachübertragung von einem Mobilfunkteilnehmer zu einem anderen Mobilfunkteilnehmer verdoppelt sich die Verzögerungszeit und beträgt ungefähr 180 ms (2x90 ms).

Durch diese hohe Verzögerungszeit kann die Qualität der übertragenen Sprache durch Echos leiden.

Bei dem in Fig. 4 dargestellten Blockbild, das teilweise dem in Fig. 2 dargestellten Blockbild entspricht, verwendet der Sprachcodierer SC1 einen Algorithmus, der in der ITU Recommendation G.728 ("Goding of Speech at 16 kbit/s Low Delay-Code Excited Linear Prediction (LDF-CELP)") definiert ist. Dem Sprachcodierer SC1 ist eine Codierstufe CS1 nachgeschaltet, die jeden vom Sprachcodierer SC1 abgegebenen Sprachrahmen S1 einer Kanalcodierung für die Fehlersicherung durch Hinzufügen von Redundanz codiert. Diese Kanalcodierung entspricht dem Teil der Kanalcodierung, der beim aus Fig. 2 bekannten System in der Codierstufe CS durchgeführt wird und der sich mit der Fehlersicherung, d.h. mit der Fehlererkennung oder Fehlerkorrektur befaßt. Die Codierstufe CS1 gibt an eine nachgeschaltete Schaltstufe CU sprach- und kanalcodierte Sprachrahmen S2 ab. Diese fügt die Sprachrahmen S2 zu Multi-Sprachrabmen MSF1 zusammen. Diese Multi-Sprachrahmen MSF1 können dann in entsprechender Weise wie bei dem aus Fig. 2 bekannten System in einer Codierstufe CS2 verarbeitet werden, wobei in diesem Fall eine erneute Kanlcodierung für die Fehlererkennung und Fehlerkorrektur entfallen kann und dann nur eine Verschachtelung und Aufteilung der verschachtelten Multi-Sprachrahmen MSF1 durchgeführt wird. Falls die Codierstufe CS auch eine Kanalcodierung durchführt, erfolgt in der Decodierstufe DCS1 auch eine entsprechende Decodierung dieser Kanalcodierung.

Auf der Empfangsseite ist der Empfangsseinrichtung R eine Decodierstufe DCS1 nachgeschaltet, die in diesem Fall, im Unterschied zu dem aus Fig. 2 bekannten System, nur eine Entschachtelung und eine Zusammenfassung der übertragenen Sprachrahmen zu Multi-Sprachrahmen MSF3 durchführt. Der Decodierstufe DCS1 ist eine Schaltstufe CU1 nachgeschaltet, die die empfangenen Multi-Sprachrahmen MSF3 wieder in einzelne sprach- und kanalcodierte Sprachrahmen S3 zerlegt. Diese liegen an einer weiteren Decodierstufe DCS2 an, die die Kanalcodierung decodiert und sprachcodierte Sprachrahmen S4 an einen entspechenden Sprachdecodierer SD1 abgibt. Der Sprachdecodierer SD1 setzt die sprachcodierten Sprachrahmen S4 wieder in Sprachrabmen S' um, die den Sprachrahmen S entsprechen. Anschließend setzt der Digital-Analog-Wandler DA die Codewörter der Sprachrahmen S' wieder in analoge Sprachsignale um, die über die Ausgabeeinheit AE an der Wiedergabeeinheit H ausgegeben werden.

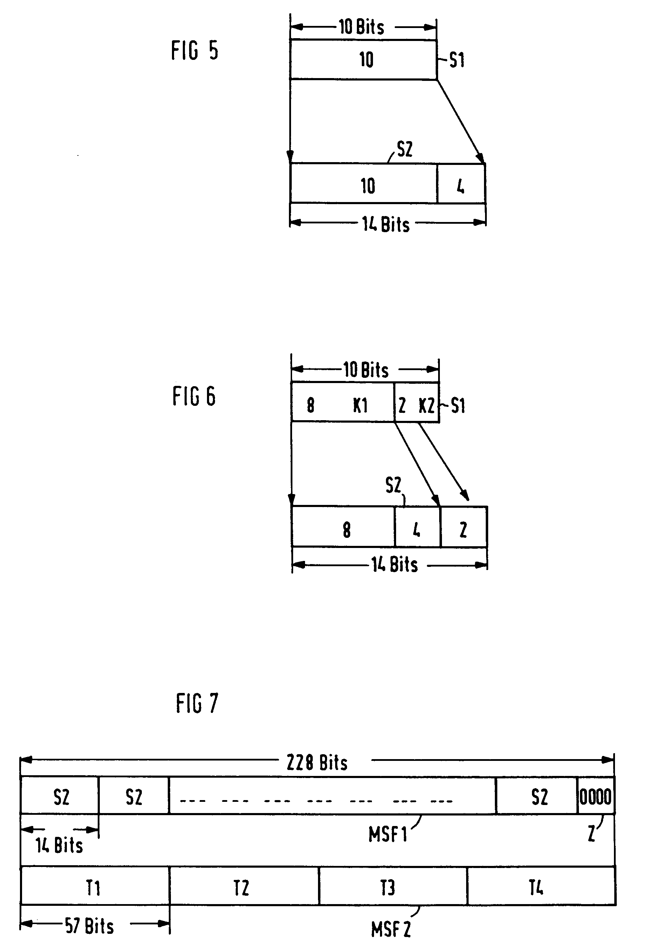

Die vom Analog-Digital-Umsetzer AD abgegebenen Sprachrabmen S bestehen beispielsweise aus jeweils 14 Bits, die den Abtastwerten zugeordnet sind, wobei jeder Abtastwert mit 14 Bits linear quantisiert ist. Die Abtastrate betragt 8000/s. Somit beträgt die Dauer eines Sprachrahmens S 0,625 ms (5x0,125 ms). Für jeden Sprachrahmen S, bestehend aus fünf Codewörtern, liefert der 16 kbit/s LD-CELP Sprachcodierer SC einen sprachcodierten Sprachrahmen S1 bestehend aus 10 Bits, wie sie in der Darstellung in den Fig. 5 und 6 gezeigt sind. Dies bedeutet, daß der Sprachcodierer SC1 Sprachrahmen S mit einer Länge von 0,625 ms verarbeitet. Die Verarbeitungszeit eines Sprachrahmens S des 16 kbit/s LD-CELP Sprachcodierers SC beträgt etwa nur 2 ms.

Wie in Fig. 5 dargestellt ist, werden die sprachcodierten Sprachrahmen S1 mit jeweils 10 Bits mittels eines sog. gekürzten (shortened) BCH-Codes (14, 10, 3) unter Hinzufügen von Redundanz in der Codierstufe CS1 in sprach- und kanalcodierte Sprachrahmen S2 umgesetzt. Bei dieser Kanalcodierung wird jedem sprachcodierten Sprachrahmen S1 eine 4 Bits umfassende Redundanz hinzugefügt, um die sprach- und kanalcodierten Sprachrahmen S2 mit jeweils 14 Bits zu erhalten. Diese Codierung kann mittels eines linear rückgekoppelten Schieberegisters durchgeführt werden. Mehrere sprach- und kanalcodierte Sprachrahmen S2 können nun in der Steuereinheit CU zu jeweils einem Multi-Sprachrahmen MSF1 zusammengefaßt werden, wie er in Fig. 7 dargestellt ist.

Bei der in Fig. 6 dargestellten Kanalcodierung wird anstelle des gekürzten BCH-Codes (14, 10, 3) ein gekürzter BCH-Code (12, 8, 3) verwendet, um die 14 Bits des sprach- und kanalcodierte Sprachrahmens S2 zu erzeugen. Dabei wird jeder sprachcodierte Sprachrahmen S1 bestehend aus 10 Bits in zwei Klassen K1 und K2 zerlegt. Die erste Klasse K1 bestehend aus 8 Bits, die sehr wichtige Informationen der Sprache enthalten und daher stark gegen Störungen auf dem Übertragungskanal geschützt werden müssen, werden mit dem gekürzten BCH-Code (12, 8, 3) kanalcodiert. Dabei werden den acht Bits vier Bits Redundanz hinzugefügt. Die andere Klasse K2 bestehend aus zwei Bits bleibt ungeschützt. Die auf diese Weise erzeugten sprach- und kanalcodierten Sprachrahmen S2 lassen sich ebenfalls zu Multi-Sprachrahmen MSF1 zusammenfassen.

Wie es in Fig. 7 gezeigt ist, können mehrere sprach- und kanalcodierte Sprachrahmen S2, bestehend aus jeweils 14 Bits, zu einem Multi-Sprachrahmen MSF1 zusammengefaßt werden. Faßt man z.B. 16 Sprachrahmen S2 zu einem Multi-Sprachrahmen MSF1 zusammen, dann enthält der Multi-Sprachrahmen MSF1 224 Bits und dies entspricht einem Sprachintervall von 10 ms (16x0,625 ms). Der Multi-Sprachrahmen MSF1 enthalt dann 160 Bits Sprachinformation und 64 Bits Redundanz zur Fehlererkennung oder Fehlerkorrektur. Durch das Hinzufügen von vier Zusatzbits Z (z.B. Nullen) besitzt der auf diese Weise gebildete Multi-Sprachrahmen MSF2 dann 228 Bits. Diesen Multi-Sprachrahmen MSF2 zerlegt man für eine Übertragung in einem Übertragungssystem entsprechend Fig. 2 in vier Teilblöcke T1 bis T4 bestehend aus jeweils 57 Bits und übertragt pro 4,615 ms einen Teilblock T. Durch die Anwendung dieses Verfahrens reduziert sich damit die Verzögerungszeit für die Sprachübertragung auf über 50 ms, nämlich

| | |
|---|---|
| Sprachrahmen | 10,0 ms |
| Übertragung der Teilblöcke | 18,0 ms |
| Signalverarbeitungszeit | 2,0 ms |
| Übertragungszeit (terrestrisch) | 5,0 ms |
| Totale Verzögerungszeit | 35,0 ms |

Es lassen sich auch kleinere oder größere Multi-Sprachrahmen MSF1 bilden. Ein 20 ms Multi-Sprachrahmen MSF1 besteht aus 32 sprach- und kanalcodierten Sprachrahmen S2 und möglichen Zusatzbits Z, d.h. aus 456 Bits. Ein 5 ms Multi-Sprachrahmen MSF1 besteht aus vier sprach- und kanalcodierten Sprachrahmen S2.

Auf der Empfangsseite ist der der Empfangseinheit R nachgeschalteten Decodierstufe DCS1 eine Steuereinheit CU1 nachgeschaltet, die die entschachtelten und gegebenenfalls decodierten Multi-Sprachrahmen MSF3 wieder in entsprechende sprach- und kanalcodierte Sprachrahmen S3 zerlegt. Eine Decodierstufe DCS2 entfernt aus den Sprachrahmen S3 wieder die in der Codierstufe CS1 hinzugefügte Redundanz und erzeugt die Sprachrahmen S4, die den Sprachrabmen S1 entsprechen. Anschließend erzeugt der Sprachdecodierer SD1 die Sprachrabmen S', die den Sprachrahmen S entsprechen und dann setzt der Digital-Analog-Wandler DA die Codewörter der Sprachrahmen S' wieder in analoge Sprachsignale um, die über die Ausgabeeinheit AE an der Wiedergabeeinheit H ausgegeben werden.

Anstatt zum Multi-Sprachrahmen MSF1 die vier Zusatzbits hinzuzufügen, kann man diese auch weglassen und die Multi-Sprachrahmen MSF1 in der Codierstufe CS2 direkt verschachteln und in mehrere Teilblöcke zerlegen. Anderseits besteht auch die Möglichkeit, den aus mehreren sprach- und kanalcodierten Sprachrabmen S2 gebildeten Multi-Sprachrahmen MSF1 zusätzliche Redundanz hinzuzufügen. In entsprechender Weise wird dann auf der Empfangsseite diese Redundanz in der Decodierstufe DCS1 wieder entfernt.

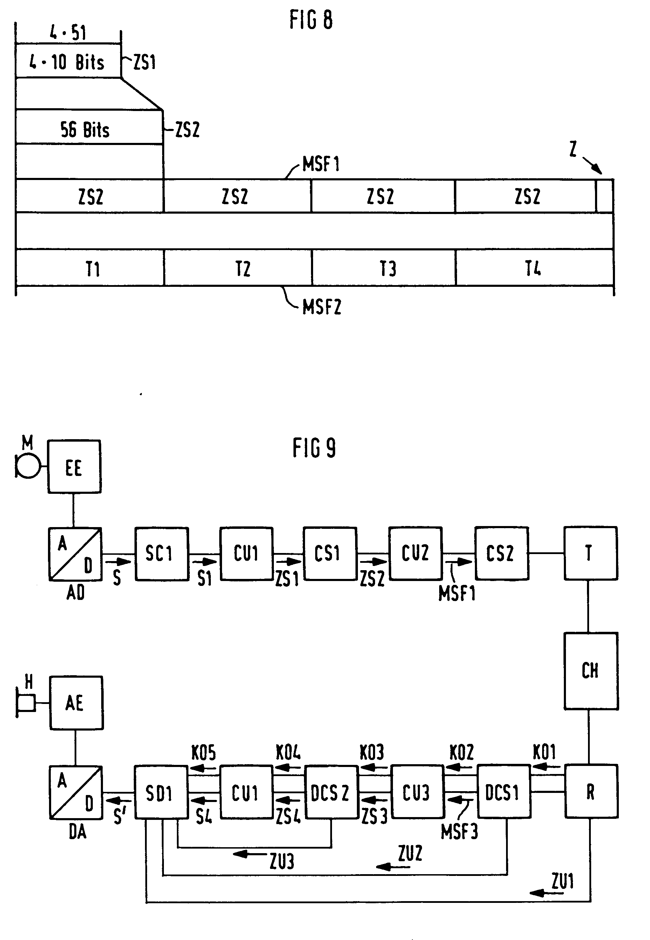

Es besteht auch die Möglichkeit, mehrere, z.B. vier sprachcodierten Sprachrahmen S1 vor der Kanalcodierung zu einem Zwischen-Sprachrahmen ZS1 zusammenzufassen. Dies ist schematisch in Fig. 8 dargestellt. Mehrere Zwischen-Sprachrahmen ZS1 werden dann zu dem Multi-Sprachrahmen MSF1 zusammengefaßt und in mehreren Teilblöcken nach einer Verschachtelung und gegebenenfalls nach einer weiteren Kanalcodierung übertragen.

Bei dem in Fig. 8 gezeigten Beispiel werden jeweils vier sprachcodierte Sprachrahmen S1 mit jeweils 10 Bits zu einem Zwischen-Sprachrahmen ZS1 zusammengefaßt. Dieser Zwischen-Sprachrahmen ZS1 enthält dann codierte Sprache einer Dauer von 4x0,625 msec = 2,5 msec. Der Zwischen-Sprachrahmen ZS1 wird unter Hinzufügen von 16 Bits Redundanz kanalcodiert. Jeweils vier auf diese Weise erzeugte Zwischen-Sprachrahmen ZS2 einer Länge von jeweils 56 Bits werden zu einem Multi-Sprachrabmen MSF1 zusammengefaßt, der noch vier als Füllbits oder Redundanzbits dienende Zusatzbits Z enthalten kann. Nach einer Aufteilung in vier Teilblöcke T1 bis T4 von jeweils 57 Bits und einer Verschachtelung werden diese Teilblöcke dann übertragen, wobei zwei solche Multi-Sprachrahmen MSF1 mit jeweils 228 Bits einem in Fig. 3 dargestellten Sprachrahmen SF2 mit 456 Bits entsprechen. Auf der Empfangsseite werden dann die Teilblöcke T wieder zusammengefaßt und es werden durch Entschachtelung wieder die Multi-Sprachrahmen MSF3 gebildet. Danach werden diese in Zwischen-Sprachrahmen ZS3 aufgeteilt und daraus wieder die Zwischen-Sprachrahmen ZS4 gewonnen, die den Zwischensprachrahmen ZS1 entsprechen.

Bei der in Fig. 9 gezeigten Anordnung erfolgt die Zusammenfassung zu den Zwischen-Sprachrahmen ZS1 in einer Steuereinheit CU1, die Kanalcodierung zur Erzeugung der ZwischenSprachrahmen ZS2 in einer Codierstufe CS1 und die Bildung des Multi-Sprachrahmen MSF1 in einer Steuereinheit CU2. In entsprechender Weise erzeugt die Decodierstufe DCS1 die Multi-Sprachrahmen MSF3, die Steuereinheit CU3 die entsprechenden kanalcodierten Zwischen-Sprachrahmen ZS3, eine Decodierstufe DCS2 die sprachcodierten Zwischen-Sprachrahmen ZS4, eine Steuereinheit CU4 die sprach- und kanalcodierten Sprachrahmen S4, die dann entsprechend der Anordnung nach Fig. 4 weiterverarbeitet werden.

Neben der Funktion der Sprachcodierung hat ein Sprachcodierer SC1 in der Regel die Funktion der Sprachinterpolation. Die Sprachinterpolation dient dazu, bei für ungültig erklärten bzw. nicht korrigierbaren empfangenen Sprachrahmen die Sprache für die Dauer des ungültigen Sprachrahmens zu interpolieren. Die Sprachinterpolation wird mit Hilfe des oder der letzten gültigen Sprachrahmen(s) durchgeführt. Ein einfaches Verfahren zur Sprachinterpolation besteht in einer Wiederholung des letzten gültigen Sprachrahmens, Zwischen-Sprachrahmens oder Multi-Sprachrahmens. Falls mehr als eine vorgegebene Anzahl von Sprachrahmen, Zwischen-Sprachrabmen oder Multi-Sprachrahmen von den entsprechenden Einrichtungen für ungültig erklärt worden ist, so beginnt der Sprachdecodierer SD1 beispielsweise damit, die Sprache langsam zu dämpfen. Das Kriterium, ob ein Sprachrahmen, Zwischen-Sprachrahmen oder ein Multi-Sprachrahmen korrekt oder nicht korrekt empfangen wurden, wird von der Empfangseinrichtung R oder von den Decodierstufen DCS1 und/oder DCS2 erzeugt und als Signale KO1 bis KO5 an den Sprachdecodierer SD1 abgegeben.

Die Empfangseinrichtung R, die Decodierstufen DCS1, DCS2 und/oder die Steuereinheiten CU1, CU2 können jedem Bit oder einer Gruppe von Bits ein Zuverlässigkeitsmaß zuordnen. Das Zuverlässigkeitsmaß oder die Kanalzustandsinformation geben an, mit welcher Zuverlässigkeit die Bitentscheidung durchgeführt worden ist. Das Zuverlässigkeitsmaß kann in mehreren Stufen quantisiert sein. Die Leistungsfähigkeit der Decodierstufen DCS1 und DCS2 für die Korrektur oder für die Erkennung der Fehler wird erhöht, wenn die Zuverlässigkeitsmaße bzw. die Kanalzustandsinformation beim Decodieren berücksichtigt werden. Weiterhin können die Decodierstufen DCS1 und DCS2 für jedes decodierte Bit oder eine Gruppe von decodierten Bits ebenfalls ein Zuverlässigkeitsmaß hinzufügen. Damit kann die nachfolgende Decodierstufe DCS2 die von der ersten Decodierstufe DCS1 gelieferten Zuverlässigkeitsmaße ebenfalls beim Decodieren berücksichtigen, d.h. in das Decodierverfahren integrieren. Die Kanalzustandsinformation wird jeweils durch die Signale ZU1 bis ZU5 weitergegeben.

Während Sprachpausen müssen nicht alle Multi-Sprachrahmen MSF übertragen werden. Es können dann entweder keine oder nur vereinzelte, d.h. ein oder wenige Multi-Sprachrahmen MSF übertragen werden. Falls nur vereinzelte Multi-Sprachrahmen MSF übertragen werden, werden mit diesen charakteristische Merkmale, insbesondere Hintergrundgeräusche, übertragen. Auf der Empfangsseite werden dann aus den vereinzelt übertragenen Multi-Sprachrahmen entsprechende Hintergrundgeräusche erzeugt.

Das Verfahren gemäß der Erfindung eignet sich für eine Übertragung von Sprache in einem Funknetz, insbesondere in einem Mobilfunknetz. Es ist jedoch auch möglich, das Verfahren in einem Netz anzuwenden, bei dem die Übertragung mindestens streckenweise in einem leitungsgebundenen Netz erfolgt.

Es erweist sich auch als zweckmäßig, den Teilnehmerstationen die Anzahl der zu einem Multi-Sprachrahmen MSF zusammengefaßten sprach- und kanalcodierte Sprachrahmen S2 mitzuteilen. Den Teilnehmerstationen kann auch der Algorithmus zum Zusammenfassen der sprach- und kanalcodierte Sprachrahmen zu einem Multi-Sprachrahmen MSF1 und zum Hinzufügen der Redundanz in den sprach- und kanalcodierten Sprachrahmen S2 mitgeteilt werden. Ebenso kann den Teilnehmerstationen eine Veränderung der Anzahl der zu einem Multi-Sprachrahmen MSF zusammengefaßten sprach- und kanalcodierten Sprachrahmen S2 mitgeteilt werden. Eine weitere Möglichkeit besteht darin, die Festlegung der Anzahl der zu einem Multi-Sprachrahmen MSF zusammengefaßten sprach- und kanalcodierten Sprachrahmen S2 in Abhängigkeit von der Qualität der Übertragung durchzuführen. In gleicher Weise kann auch die Festlegung der Anzahl der Teilblöcke T1 bis T4, in die ein Multi-Sprachrahmen MSF1 aufgeteilt wird, in Abhängigkeit von der Qualität der Übertragung erfolgen.

## Patentansprüche

1. Verfahren zum Übertragen von Sprachinformation zwischen Teilnehmerstationen eines Funksystems, bei dem analoge Sprachinformation durch Sprachrahmen (S) digital codiert wird, bei dem die Sprachrahmen (S) in sprachcodierte Sprachrahmen (S1) umgesetzt werden, bei dem diese sprachcodierten Sprachrahmen (S1) durch Kanalcodierung fehlergesichert über mindestens einen Übertragungskanal (CH) übertragen werden und bei dem auf der Empfangsseite die kanal- und sprachcodierten Sprachrahmen kanaldecodiert werden und die in den kanaldecodierten Sprachrahmen enthaltene digitale Sprachinformation nach einer Sprachdecodierung wieder in analoge Sprachinformation umgesetzt wird,
**dadurch gekennzeichnet,**
daß auf der Sendeseite jeweils eine Mehrzahl von einem Teilnehmer zugeordneten sprach- und kanalcodierten Sprachrahmen (S2) zu einem Multi-Sprachrahmen (MSF1) zusammengefaßt werden und daß auf der Empfangsseite die Multi-Sprachrahmen (MSF3) wieder in sprach- und kanalcodierte Sprachrahmen (S3) aufgeteilt werden.

2. Verfahren nach Anspruch 1,
**dadurch gekennzeichnet,**
daß die sprach- und kanalcodierten Sprachrahmen (S2) in an sich bekannter Weise kanalcodiert werden.

3. Verfahren nach Anspruch 2,
**dadurch gekennzeichnet,**
daß die Kanalcodierung durch ein ungleich gewichtetes Fehlerschutzverfahren erfolgt.

4. Verfahren nach einem der Ansprüche 1 bis 3,
**dadurch gekennzeichnet,**
daß die Übertragung der einzelnen Multi-Sprachrahmen (MSF1) durch Aufteilung auf jeweils mehrere Teilblöcke (T1 bis T4) erfolgt, die getrennt voneinander übertragen werden.

5. Verfahren nach Anspruch 4,
**dadurch gekennzeichnet,**
daß die Teilblöcke (T1 bis T4) verschlüsselt übertragen werden.

6. Verfahren nach einem der Ansprüche 1 bis 5,
**dadurch gekennzeichnet,**
daß für mindestens einen vorgegebenen Übertragungsbereich die Anzahl der zu einem Multi-Sprachrahmen (MSF1) zusammengefaßten sprach- und kanalcodierten Sprachrahmen (S2) festgelegt wird.

7. Verfahren nach einem der Ansprüche 1 bis 6,
**dadurch gekennzeichnet,**
daß den Teilnehmerstationen die Anzahl der zu einem Multi-Sprachrahmen (MSF1) zusammengefaßten sprach- und kanalcodierte Sprachrahmen (S2) mitgeteilt wird.

8. Verfahren nach einem der Ansprüche 1 bis 7,
**dadurch gekennzeichnet,**
daß den Teilnehmerstationen der Algorithmus zum Zusammenfassen der sprach- und kanalcodierte Sprachrahmen (S2) zu einem Multi-Sprachrahmen (MSF1) und zum Hinzufügen der Redundanz in den sprach- und kanalcodierten Sprachrahmen (S2) mitgeteilt wird.

9. Verfahren nach einem der Ansprüche 1 bis 8,
**dadurch gekennzeichnet,**
daß den Teilnehmerstationen eine Veränderung der Anzahl der zu einem Multi-Sprachrahmen (MSF1) zusammengefaßten sprach- und kanalcodierte Sprachrahmen (S2) mitgeteilt wird.

10. Verfahren nach einem der Ansprüche 1 bis 9,
**dadurch gekennzeichnet,**
daß die Festlegung der Anzahl der zu einem Multi-Sprachrahmen (MSF1) zusammengefaßten sprach- und kanalcodierte Sprachrahmen (S2) in Abhängigkeit von der Qualität der Übertragung erfolgt.

11. Verfahren nach einem der Ansprüche 4 bis 10,
**dadurch gekennzeichnet,**
daß die Festlegung der Anzahl der Teilblöcke (T1 bisa T4), in die ein Multi-Sprachrahmen (MSF1) aufgeteilt wird, in Abhängigkeit von der Qualität der Übertragung erfolgt.

12. Verfahren nach einem der Ansprüche 1 bis 11,
**dadurch gekennzeichnet,**
daß die Übertragung der Multi-Sprachrahmen (MSF1) in einem Mobilfunknetz erfolgt.

13. Verfahren nach einem der Ansprüche 1 bis 12,
**dadurch gekennzeichnet,**
daß die Übertragung der Multi-Sprachrahmen (MSF1) streckenweise in einem leitungsgebundenen Netz erfolgt.

14. Verfahren nach einem der Ansprüche 1 bis 13,
**dadurch gekennzeichnet,**
daß die Multi-Sprachrahmen (MSF1) vor der Übertragung einer weiteren Kanalcodierung unterzogen werden.

15. Verfahren nach einem der vorangehenden Ansprüche,
**dadurch gekennzeichnet,**
daß während Sprachpausen keine Multi-Sprachrahmen (MSF1) übertragen werden.

16. Verfahren nach einem der Ansprüche 1 bis 15,
**dadurch gekennzeichnet,**
daß während Sprachpausen nur vereinzelt Multi-Sprachrahmen (MSF) übertragen werden.

17. Verfahren nach Anspruch 16,
**dadurch gekennzeichnet,**
daß mittels der einzelnen Multi-Sprachrahmen (MSF) auf der Empfangsseite Hintergrundgeräusche erzeugbar sind.

18. Verfahren nach einem der vorangehenden Ansprüche,
**dadurch gekennzeichnet,**
daß jeweils eine Mehrzahl von sprachcodierten Sprachrahmen (S1) zu einem Zwischen-Sprachrahmen (ZS1) zusammengefaßt werden und daß dann jeweils eine Mehrzahl von Zwischen-Sprachrahmen (ZS2) zu einem Multi-Sprachrahmen (MSF) zusammengefaßt werden.

19. Verfahren nach Anspruch 18,
**dadurch gekennzeichnet,**
daß bei der Bildung der Zwischen-Sprachrahmen (ZS1) diese kanalcodiert werden, um weitere Zwischen-Sprachrahmen (ZS2) zu erzeugen.

20. Verfahren nach einem der vorangehenden Ansprüche,
**dadurch gekennzeichnet,**
daß auf der Empfangsseite ein Kriterium (KO1 bis KO5) erzeugt wird, das eine Sprachinterpolation veranlaßt.

21. Verfahren nach Anspruch 20,
**dadurch gekennzeichnet,**
daß die Sprachinterpolation durch Wiederholung eines vorangegangenen Sprachrahmens (S, ZS, MSF) erfolgt.

22. Verfahren nach einem der vorangehenden Ansprüche,
**dadurch gekennzeichnet,**
daß auf der Empfangsseite Zuverlässigkeitsmaße und/oder Kanalzustandsinformationen mitberücksichtigt werden.

23. Anordnung zum Übertragen von Sprachinformation zwischen Teilnehmerstationen eines Funksystems, bei dem analoge Sprachinformation in Form von Sprachrahmen (S) digital codiert wird, bei dem die Sprachrahmen (S) in einem Sprachcodierer (SC1) in sprachcodierte Sprachrahmen (S1) umgesetzt werden, bei dem diese sprachcodierten Sprachrahmen (S1) in einer Codierstufe kanalcodiert werden, bei dem die durch die Kanalcodierung fehlergesicherten Sprachrahmen über mindestens einen Übertragungskanal (CH) übertragen werden und bei dem auf der Empfangsseite in einem Kanaldecodierer die kanal- und sprachcodierten Sprachrahmen kanaldecodiert werden und die in den kanaldecodierten Sprachrahmen enthaltene digitale Sprachinformation mittels eines Sprachdecodierers (SD) wieder in analoge Sprachinformation umgesetzt wird,
**dadurch gekennzeichnet,**
daß der Codierstufe (CS1) eine Steuereinheit (CU) nachgeschaltet ist, die jeweils eine Mehrzahl von einem Teilnehmer zugeordneten sprach- und kanalcodierten Sprachrahmen (S2) zu einem Multi-Sprachrahmen (MSF1) zusammenfaßt und daß auf der Empfangsseite eine weitere Steuereinheit (CU1) vorgesehen ist, die diese Multi-Sprachrahmen (MSF3) wieder in sprach- und kanalcodierte Sprachrahmen (S3) aufteilt.

24. Teilnehmerstation zum Übertragen von Sprachinformation von und/oder zu einer Zentralstation eines Funksystems, bei dem analoge Sprachinformation in Form von Sprachrahmen (S) digital codiert wird, bei dem die Sprachrahmen (S) in einem Sprachcodierer (SC1) in sprachcodierte Sprachrahmen (S1) umgesetzt werden, bei dem diese sprachcodierten Sprachrahmen (S1) in einer Codierstufe kanalcodiert werden, bei dem die durch die Kanalcodierung fehlergesicherten Sprachrahmen über mindestens einen Übertragungskanal (CH) übertragen werden und bei dem auf der Empfangsseite in einem Kanaldecodierer die kanal- und sprachcodierten Sprachrahmen kanaldecodiert werden und die in den kanaldecodierten Sprachrahmen enthaltene digitale Sprachinformation mittels eines Sprachdecodierers (SD) wieder in analoge Sprachinformation umgesetzt wird,
**dadurch gekennzeichnet,**
daß der Codierstufe (CS1) eine Steuereinheit (CU) nachgeschaltet ist, die jeweils eine Mehrzahl von einem Teilnehmer zugeordneten sprach- und kanalcodierten Sprachrahmen (S2) zu einem Multi-Sprachrahmen (MSF1) zusammenfaßt und daß dem Kanaldecodierer (DCS2) eine weitere Steuereinheit (CU1) vorgeschaltet ist, die diese Multi-Sprachrahmen (MSF3) wieder in sprach- und kanalcodierte Sprachrahmen (S3) aufteilt.

25. Zentralstation zum Übertragen von Sprachinformation von und/oder zu einer Teilnehmerstation eines Funksystems, bei dem analoge Sprachinformation in Form von Sprachrahmen (S) digital codiert wird, bei dem die Sprachrahmen (S) in einem Sprachcodierer (SC1) in sprachcodierte Sprachrahmen (S1) umgesetzt werden, bei dem diese sprachcodierten Sprachrahmen (S1) in einer Codierstufe kanalcodiert werden, bei dem die durch die Kanalcodierung fehlergesicherten Sprachrahmen über mindestens einen Übertragungskanal (CH) übertragen werden und bei dem auf der Empfangsseite in einem Kanaldecodierer die kanal- und sprachcodierten Sprachrahmen kanaldecodiert werden und die in den kanaldecodierten Sprachrahmen enthaltene digitale Sprachinformation mittels eines Sprachdecodierers (S) wieder in analoge Sprachinformation umgesetzt wird,
**dadurch gekennzeichnet,**
daß der Codierstufe (CS1) eine Steuereinheit(CU) nachgeschaltet ist, die jeweils eine Mehrzahl von einem Teilnehmer zugeordneten sprach- und kanalcodierten Sprachrahmen (S2) zu einem Multi-Sprachrahmen (MSF1) zusammenfaßt und daß dem Kanaldecodierer (DCS2) eine weitere Steuereinheit (CU1) vorgeschaltet ist, die diese Multi-Sprachrahmen (MSF3) wieder in sprach- und kanalcodierte Sprachrahmen (S3) aufteilt.
